# FASCICULE DE BREVET EUROPEEN

(11) **EP 2 219 999 B1**
(45) Date de publication et mention de la délivrance du brevet: **31.08.2011**
(21) Numéro de dépôt: 08870855.7
(22) Date de dépôt: 17.10.2008
(51) Int. Cl.: C01B 37/02, C01B 39/48

(54) **SOLIDE CRISTALLISE IZM-3 ET SON PROCEDE DE PREPARATION**
KRISTALLISIERTER IZM-3-FESTKÖRPER UND HERSTELLUNGSVERFAHREN DAFÜR
CRYSTALLISED SOLID IZM-3 AND METHOD FOR PREPARING SAME

(30) Priorité: 26.11.2007 FR 0708297
(43) Date de publication de la demande: 25.08.2010
(73) Titulaire: IFP Energies nouvelles, 92852 Rueil-Malmaison Cedex (FR)
(72) Inventeur: FECANT, Antoine, F-69530 Brignais (FR); BATS, Nicolas, F-69320 Feyzin (FR)
(86) Numéro de dépôt international: PCT/FR2008/001457
(87) Numéro de publication internationale: WO 2009/090336

(56) Documents cités:
- WO-A-98/29339
- US-A- 4 539 193

## Description

### Domaine technique

La présente invention se rapporte à un nouveau solide microporeux cristallisé appelé ci-après IZM-3 ainsi qu'au procédé de préparation dudit solide.

### Art antérieur

Les matériaux microporeux cristallisés, tel que les zéolithes ou les silicoaluminophosphates, sont des solides très utilisés dans l'industrie pétrolière en tant que catalyseurs, supports de catalyseur, adsorbants ou agents de séparation. Bien que de nombreuses structures cristallines microporeuses aient été découvertes, l'industrie du raffinage et de la pétrochimie est toujours à la recherche de nouvelles structures cristallisées qui présentent des propriétés particulières pour des applications comme la purification ou la séparation des gaz, la conversion d'espèces carbonées ou autres.

Parmi les structures cristallisées, les zéolithes occupent une grande place. Parmi les zéolithes synthétisées depuis une quarantaine d'années, un certain nombre de solides a permis de réaliser des progrès significatifs dans lés domaines de l'adsorption et de la catalyse. Parmi celles-ci, on peut citer la zéolithe Y (US 3,130,007) et la zéolithe ZSM-5 (US 3,702,886). Le nombre de nouveaux tamis moléculaires, recouvrant les zéolithes, synthétisés chaque année est en progression constante. Pour avoir une description plus complète des différents tamis moléculaires découverts, on peut utilement se référer à l'ouvrage suivant : "Atlas of Zeolite Framework Types", Ch. Baerlocher, W.M. Meier and D.H. Olson, Fifth Revised Edition, 2001, Elsevier. On peut citer la zéolithe NU-87 (US-5,178,748), la zéolithe MCM-22 (US-4,954,325) ou bien encore le gallophosphate (clovérite) de type structural CLO (US-5,420,279), ou encore les zéolithes ITQ-12 (US-6,471,939), ITQ-13 (US-6,471,941), CIT-5 (US-6,043,179), ITQ-21 (WO-02/092511), ITQ-22 (Corma, A. et al, Nature Materials 2003, 2, 493), SSZ-53 (Burton, A., et al, Chemistry : a Eur. Journal, 2003, 9, 5737), SSZ-59 (Burton, A., et al, Chemistry : a Eur. Journal, 2003, 9, 5737), SSZ-58 (Burton, A., et al, J. Am. Chem. Soc., 2003, 125, 1633) et UZM-5 (Blackwell, C.S. et al, Angew. Chem., Int. Ed., 2003, 42 , 17.37).

Plusieurs des zéolithes précédemment citées ont été synthétisées en milieu fluorure dans lequel l'agent mobilisateur n'est pas l'ion hydroxyde habituel mais l'ion fluorure selon un procédé initialement décrit par Flanigen et al (US-4,073,865), puis développé par J.-L. Guth et al. (Proc. Int. Zeol. Conf., Tokyo, 1986, p. 121). Les pH des milieux de synthèses sont typiquement proches de la neutralité. Un des avantages de ces systèmes réactionnels fluorés est de permettre l'obtention de zéolithes purement siliciques contenant moins de défauts que les zéolithes obtenues en milieu OH⁻ traditionnel (J.M. Chézeau et al., Zeolites, 1991, 11, 598). Un autre avantage décisif lié à l'utilisation de milieux réactionnels fluorés est de permettre l'obtention de nouvelles topologies de charpente silicique contenant des doubles cycles à quatre tétraèdres (D4R), comme dans le cas des zéolithes ITQ-7, ITQ-12 et ITQ-13. Par ailleurs, l'utilisation conjointe de sources de germanium et de silicium dans les milieux de synthèse peut aussi permettre l'obtention de nouvelles charpentes de ce type, c'est-à-dire contenant des unités D4R, aussi bien en milieu basique classique non fluoré qu'en milieu fluoré, comme dans le cas des zéolithes ITQ-17 et ITQ-21 (A. Corma et al, Chem. Commun., 2001, 16, 1486, Chem. Commun., 2003, 9, 1050) ou IM-12 (J.-L. Paillaud et al, Science, 2004, 304, 990).

### Description de l'invention

La présente invention a pour objet un nouveau solide cristallisé, appelé solide cristallisé IZM-3, présentant une nouvelle structure cristalline. Ledit solide présente une composition chimique exprimée sur une base anhydre, en termes de moles d'oxydes, définie par la formule générale suivante : aSiO₂ ; bYO₂ : cR : dF, où Y représente au moins un élément tétravalent différent du silicium, R représente au moins une espèce organique azotée, et F est le fluor, a, b, c et d représentant respectivement le nombre de moles de SiO₂, YO₂, R et F et a est compris entre 0,1 et 1, b est compris entre 0 et 0,9, c est compris entre 0,01 et 0,5 et d est compris entre 0 et 0,5.

Le solide cristallisé IZM-3 selon l'invention présente un diagramme de diffraction de rayons X incluant au moins les raies inscrites dans le tableau 1. Ce nouveau solide cristallisé IZM-3 présente une nouvelle structure cristalline.

Ce diagramme de diffraction est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'erreur de mesure Δ(dₕₖₗ) sur dₕₖₗ est calculée grâce à la relation de Bragg en fonction de l'erreur absolue Δ(2θ) affectée à la mesure de 2θ. Une erreur absolue Δ(2θ) égale à ± 0,02° est communément admise. L'intensité relative Iᵣₑₗ affectée à chaque valeur de dₕₖₗ est mesurée d'après la hauteur du pic de diffraction correspondant. Le diagramme de diffraction des rayons X du solide cristallisé IZM-3 selon l'invention comporte au moins les raies aux valeurs de dₕₖₗ données dans le tableau 1. Dans la colonne des dₕₖₗ, on a indiqué les valeurs moyennes des distances inter-réticulaires en Angströms (Å). Chacune de ces valeurs doit être affectée de l'erreur de mesure Δ(dₕₖₗ) comprise entre ± 0,6Å et ± 0,01 Å.

**Tableau 1 : Valeurs moyennes des dₕₖₗ et intensités relatives mesurées sur un diagramme de diffraction de rayons X du solide cristallisé IZM-3 brut de synthèse**

| 2 thêta (°) | dₕₖₗ (Å) | Iᵣₑₗ | 2 thêta (°) | dₕₖₗ (Å) | Iᵣₑₗ |
|---|---|---|---|---|---|
| 5,59 | 15,80 | FF | 25,09 | 3,55 | ff |
| 8,56 | 10,32 | ff | 26,00 | 3,42 | ff |
| 10, 36 | 8, 53 | ff | 26, 73 | 3, 33 | ff |
| 11,16 | 7,92 | ff | 27,40 | 3,25 | ff |
| 12,93 | 6,84 | ff | 28,17 | 3,16 | ff |
| 13,56 | 6,53 | ff | 28,61 | 3,12 | ff |
| 15,79 | 5,61 | ff | 29,74 | 3,00 | ff |
| 16,77 | 5,28 | ff | 31,31 | 2,85 | ff |
| 18,70 | 4,74 | ff | 32,62 | 2,74 | ff |
| 19,20 | 4,62 | ff | 33,86 | 2,65 | ff |
| 20,15 | 4,40 | ff | 37,10 | 2,42 | ff |
| 20,87 | 4,25 | ff | 38,18 | 2,36 | ff |
| 22,37 | 3,97 | f | 42,09 | 2,15 | ff |
| 24,29 | 3,66 | ff | | | |

| | | | | | |
|---|---|---|---|---|---|
| où FF = très fort ; F = fort ; m = moyen ; mf = moyen faible ; f = faible ; ff = très faible. L'intensité relative Iᵣₑₗ est donnée en rapport à une échelle d'intensité relative où il est attribué une valeur de 100 à la raie la plus intense du diagramme de diffraction des rayons X : ff <15 ; 15 ≤f <30 ; 30 ≤ mf <50 ; 50 ≤m < 65 ; 65 ≤F < 85 ; FF ≥ 85. | | | | | |

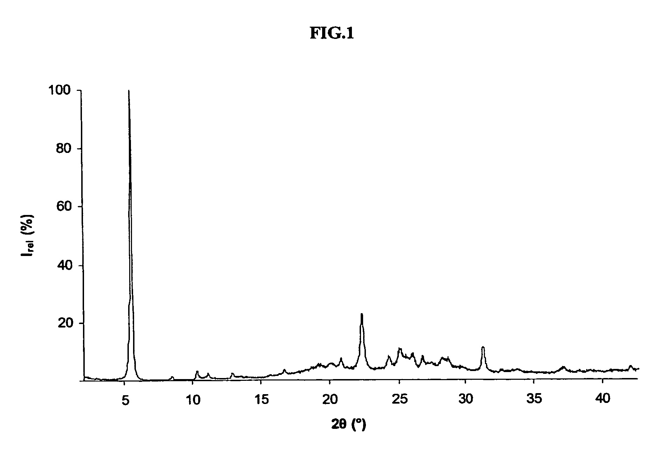

Le solide cristallisé IZM-3 selon l'invention présente une nouvelle structure cristalline de base ou topologie qui est caractérisée par son diagramme de diffraction X donné par la figure 1. La figure 1 a été établie à partir d'un solide cristallisé IZM-3 sous sa forme brute de synthèse.

Ledit solide IZM-3 présente une composition chimique exprimée sur une base anhydre, en termes de moles d'oxydes, définie par la formule générale suivante : aSiO₂: bYO₂ : cR : dF, où Y représente au moins un élément tétravalent différent du silicium, R représente au moins une espèce organique azotée et F est le fluor. Dans ladite formule donnée ci-dessus, a représente le nombre de moles de SiO₂ et est compris entre 0,1 et 1, de préférence compris entre 0,5 et 1 et de manière très préférée entre 0,8 et 0,99. b représente le nombre de moles de YO₂ et est compris entre 0 et 0,9, de préférence entre 0 et 0,5 et de manière très préférée entre 0,01 et 0,2. c représente le nombre de moles de R et est compris entre 0,01 et 0,5, de préférence entre 0,01 et 0,2 et de manière très préférée entre 0,02 et 0,05. d représente le nombre de moles de F et est compris entre 0 et 0,5, de préférence entre 0 et 0,2 et de manière très préférée entre 0,01 et 0,05.

Conformément à l'invention, Y est préférentiellement choisi parmi le germanium, le titane, l'étain et le mélange d'au moins deux de ces éléments tétravalents, très préférentiellement Y est le germanium. R est une espèce organique azotée comportant au moins un atome d'azote quaternaire, de préférence R comporte deux atomes d'azote quaternaire et très préférentiellement R est le 1,5-bis(méthylpiperidinium)pentane dont la formule développée est donnée ci-dessous. F est le fluor.

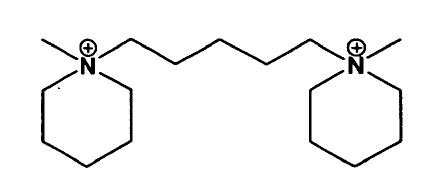

Lorsque le silicium est présent en mélange avec un élément Y, le solide cristallisé IZM-3 selon l'invention est alors un métallosilicate cristallisé présentant un diagramme de diffraction des rayons X identique à celui décrit dans le tableau 1 lorqu'il se trouve sous sa forme brute de synthèse. Lorsque Y est le germanium, le solide cristallisé IZM-3 selon l'invention est un germanosilicate cristallisé présentant un diagramme de diffraction des rayons X identique à celui décrit dans le tableau 1 lorsqu'il se trouve sous sa forme brute de synthèse. En l'absence d'élément Y dans la composition du solide cristallisé IZM-3 selon l'invention, celui-ci est un solide entièrement silicique lequel est alors un silicate cristallisé présentant un diagramme de diffraction des rayons X identique à celui décrit dans le tableau 1 lorsqu'il se trouve sous sa forme brute de synthèse.

D'une manière plus générale, ledit solide IZM-3 selon l'invention sous sa forme brute de synthèse, présente une composition chimique exprimée par la formule générale suivante : aSiO₂ : bYO₂ : cR : dF : eH₂O (1) dans laquelle R représente une espèce organique azotée comportant au moins un atome d'azote quaternaire, Y représente au moins un élément tétravalent différent du silicium, F représente le fluor ; a, b, c, d et e représentant respectivement le nombre de moles de SiO₂, YO₂, R, F et H₂O et a est compris entre 0,1 et 1, de préférence compris entre 0,5 et 1 et de manière très préférée entre 0,8 et 0,99, b est compris entre 0 et 0,9, de préférence entre 0 et 0,5 et de manière très préférée entre 0,01 et 0,2, c est compris entre 0,01 et 0,5, de préférence entre 0,01 et 0,2 et de manière très préférée entre 0,02 et 0,05, d est compris entre 0 et 0,5, de préférence entre 0 et 0,2 et de manière très préférée entre 0,01 et 0,05 et e est compris entre 0 et 2 et de préférence entre 0,01 et 0,5.

Sous sa forme brute de synthèse, c'est-à-dire directement issu de la synthèse et préalablement à toute étape d'extraction de l'espèce organique azotée bien connue de l'Homme du métier, ledit solide IZM-3 comporte au moins, l'espèce organique azotée R ayant au moins un atome d'azote quaternaire telle que celle décrite ci-après ou encore ses produits de décomposition ou encore ses précurseurs. Selon un mode préféré de l'invention, dans la formule (I) donnée ci-dessus, l'élément R est le 1,5-bis(méthylpiperidinium)pentane.

La présente invention a également pour objet un procédé de préparation du solide cristallisé IZM-3 selon l'invention dans lequel on fait réagir un mélange aqueux comportant au moins une source de silicium, éventuellement au moins une source d'au moins un oxyde YO₂, au moins une espèce organique azotée R comportant au moins un atome d'azote quaternaire, au moins une source de fluor, le mélange présentant la composition molaire suivante :
SiO₂/YO₂ : au moins 0,1, de préférence au moins 1, de manière plus préférée de 3 à 100,
H₂O/(SiO₂ + YO₂) : 1 à 100, de préférence de 10 à 70, de manière plus préférée de 20 à 50,
R/(SiO₂ + YO₂) : 0,02 à 2, de préférence de 0,1 à 1,
F/(SiO₂ + YO₂) : 0,01 à 4, de préférence de 0,02 à 2, de manière plus préférée de 0,1 à 2.
où Y est un ou plusieurs élément(s) tétravalent(s) choisi(s) dans le groupe formé par les éléments suivants : germanium, titane, étain, de préférence le germanium, où F est le fluor.

Conformément au procédé selon l'invention, R est une espèce organique azotée ayant au moins un atome d'azote quaternaire, de préférence R comporte deux atomes d'azote quaternaire, jouant le rôle de structurant organique. Préférentiellement, R est le composé azoté 1,5-bis(méthylpiperidinium)pentane. Les anions associés aux cations ammoniums quaternaires présents dans l'espèce organique structurante pour la synthèse du solide cristallisé IZM-3 selon l'invention sont choisis parmi l'anion acétate, l'anion sulfate, l'anion carboxylate, l'anion tétrafluoroborate, les anions halogénures tels que le fluorure, le chlorure, le bromure, l'iodure, l'anion hydroxyde et une combinaison de plusieurs d'entre eux. De manière préférée, les anions associés aux cations ammoniums quaternaires présents dans l'espèce structurante pour la synthèse du solide cristallisé IZM-3 sont choisis parmi l'anion hydroxyde et l'anion bromure, et de manière plus préférée il s'agit de l'anion hydroxyde. Ladite espèce organique azotée utilisée comme agent structurant du solide cristallisé IZM-3 est synthétisée par toute méthode connue de l'Homme du métier. Pour la synthèse du dibromure de 1,5-bis(méthylpiperidinium)pentane, on procède au mélange d'une mole de 1,5-dibromopentane et d'au moins 2 moles de N-méthylpiperidine dans l'éthanol. Généralement, le mélange est porté à reflux pendant une durée comprise entre 1 et 10 heures. Après filtration, précipitation au moyen d'un solvant éthéré tel que le diéthyéther puis recristallisation dans un mélange éthanol/éther, on obtient du dibromure de 1,5-bis(méthylpiperidinium)pentane. Le dihydroxyde de 1,5-bis(méthylpiperidinium)pentane est préférentiellement obtenu par traitement à température ambiante d'une solution aqueuse de dibromure de 1,5-bis(méthylpiperidinium)pentane par de l'oxyde d'argent Ag₂O.

La source de silicium, employée pour la mise en oeuvre du procédé de préparation du solide cristallisé IZM-3, peut être tout composé comprenant l'élément silicium et pouvant libérer cet élément en solution aqueuse sous forme réactive. La source de silice peut être l'une quelconque de celles couramment utilisées dans la synthèse des zéolithes, par exemple de la silice solide en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, telle que des silices aérosiles, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm telles que celles commercialisées sous les marques déposées telle que "LUDOX". De manière préférée, la source de silicium est le LUDOX AS-40. La source de l'élément Y, éventuellement employée pour la mise en oeuvre du procédé de préparation du solide cristallisé IZM-3, peut être tout composé comprenant l'élément Y et pouvant libérer cet élément en solution aqueuse sous forme réactive. Dans le cas préféré où Y est le germanium, la source de germanium est de préférence de l'oxyde de germanium amorphe. Dans le cas où Y est le titane, la source de titane est avantageusement choisie parmi l'acétate de titane Ti(CH₃CO₂)₄, l'éthoxyde de titane Ti(OC₂H₅)₄, l'isopropoxyde de titane Ti(OCH(CH₃)₂)₄ et l'oxyde de titane amorphe TiO₂. Dans le cas où Y est l'étain, la source d'étain est avantageusement choisie parmi l'acétate d'étain Sn(CH₃CO₂)₄ et l'oxyde d'étain amorphe SnO₂.

Le fluor peut être introduit sous forme de sels de métaux alcalins ou d'ammonium comme par exemple NaF, NH₄F, NH₄HF₂ ou sous forme d'acide fluorhydrique ou encore sous forme de composé hydrolysable pouvant libérer des anions fluorures dans l'eau comme le fluorure de silicium SiF₄ ou les fluorosilicates d'ammonium (NH₄)₂SiF₆ ou de sodium Na₂SiF₆. De préférence, la source de fluor est l'acide fluorhydrique.

Pour la mise en oeuvre du procédé de préparation du solide IZM-3 selon l'invention, il est préféré que le mélange aqueux, comportant au moins une source de silicium, éventuellement au moins une source d'au moins un oxyde YO₂, au moins une source de fluor, au moins une espèce organique azotée R ayant au moins un atome d'azote quaternaire, comporte également au moins une source d'ions hydroxydes. Ladite source d'ions hydroxydes provient avantageusement de l'espèce organique structurante azotée R lorsqu'elle se trouve sous sa forme hydroxyde, par exemple lorsque R est le dihydroxyde de 1,5-bis(méthylpiperidinium)pentane.

Aussi, selon un mode de réalisation préféré du procédé selon l'invention, on fait réagir un mélange aqueux comportant un oxyde de silicium, éventuellement un oxyde de germanium, de l'acide fluorhydrique et du dihydroxyde de 1,5-bis(méthylpiperidinium)pentane.

Le procédé selon l'invention consiste à préparer un mélange réactionnel aqueux appelé gel et renfermant au moins une source d'un oxyde de silicium SiO₂, éventuellement au moins une source d'au moins un oxyde YO₂, au moins une source de fluor et au moins une espèce organique azotée R. Les quantités desdits réactifs sont ajustées de manière à conférer à ce gel une composition permettant sa cristallisation en solide cristallisé IZM-3 sous sa forme brute de synthèse de formule générale (I) aSiO₂ : bYO₂ : cR : dF : eH₂O, où a, b, c, d et e répondent aux critères définis plus haut. Puis le gel est soumis à un traitement hydrothermal jusqu'à ce que le solide cristallisé IZM-3 se forme. Le gel est avantageusement mis sous conditions hydrothermales sous une pression de réaction autogène, éventuellement en ajoutant du gaz, par exemple de l'azote, à une température comprise entre 120°C et 200°C, de préférence entre 140°C et 180°C, et de manière encore plus préférée entre 160 et 175°C jusqu'à la formation des cristaux de solide IZM-3 sous sa forme brute de synthèse. La durée nécessaire pour obtenir la cristallisation varie généralement entre 1 jour et plusieurs mois en fonction de la composition des réactifs dans le gel, de l'agitation et de la température de réaction. De préférence la durée de cristallisation varie entre 2 et 21 jours et de préférence entre 5 et 14 jours. La mise en réaction s'effectue généralement sous agitation ou en absence d'agitation, de préférence en présence d'agitation.

Il peut être avantageux d'additionner des germes au mélange réactionnel afin de réduire le temps nécessaire à la formation des cristaux et/ou la durée totale de cristallisation. Il peut également être avantageux d'utiliser des germes afin de favoriser la formation du solide cristallisé IZM-3 au détriment d'impuretés. De tels germes comprennent des solides cristallisés, notamment des cristaux de solide IZM-3. Les germes cristallins sont généralement ajoutés dans une proportion comprise entre 0,01 et 10 % de la masse d'oxydes SiO₂ + YO₂ utilisée dans le mélange réactionnel.

A l'issue de l'étape de traitement hydrothermal conduisant à la cristallisation du solide IZM-3, la phase solide est filtrée, lavée puis séchée.

A l'issue de ladite étape de séchage, le solide IZM-3 obtenu est préférentiellement dépourvu d'eau et est celui présentant le diagramme de diffraction de rayons X incluant au moins les raies inscrites dans le tableau 1.

Le solide cristallisé IZM-3 selon l'invention, après extraction de l'espèce organique azotée R, est avantageusement utilisé comme adsorbant pour le contrôle de la pollution, comme tamis moléculaire pour la séparation ou encore comme adsorbant. Lorsqu'il est utilisé comme adsorbant, ledit solide est généralement dispersé dans une phase matricielle inorganique qui contient des canaux et des cavités qui permettent l'accès du fluide à séparer au solide cristallisé. Ces matrices sont préférentiellement des oxydes minéraux, par exemple des silices, des alumines, des silice-alumines ou des argiles. La matrice représente, de manière générale, entre 2 et 25% en masse de l'adsorbant ainsi formé.

L'invention est illustrée par les exemples suivants qui ne présentent, en aucun cas, un caractère limitatif.

### Exemple 1 : préparation du dibromure de 1,5-bis(méthylpiperidinium)pentane_{.}

50 g de 1,5-dibromopentane (0,22 mole, 99%, Alfa Aesar) sont ajoutés dans un ballon de 1 L contenant 50 g de N-méthylpipéridine (0,51 mole, 99%, alfa Aesar) et 200 ml d'éthanol. Le milieu réactionnel est agité et porté à reflux pendant 5 h. Le mélange est ensuite refroidi à température ambiante puis filtré. Le mélange est versé dans 300 mi de diéthyléther froid puis le précipité formé est filtré et lavé avec 100 ml de diéthyléther. Le solide obtenu est recristallisé dans un mélange éthanol/éther. Le solide obtenu est séché sous vide pendant 12 h. On obtient 75 g d'un solide blanc (soit un rendement de 80 %).

Le produit possède le spectre ¹H RMN attendu. ¹H RMN (D₂O, ppm/TMS) : 1,29 (2H,q) ; 1,51 (4H,q) ; 1,70 (12H,m) ; 2,88 (6H,s) ; 3,19 (8H,t) ; 3,20 (4H,t).

### Exemple 2 : préparation du dihydroxyde de 1,5-bis(méthylpiperidinium)pentane_{.}

18,9 g d'Ag₂O (0,08 mole, 99%, Aldrich) sont ajouté dans un bécher en téflon de 250 ml contenant 30 g du dibromure de 1,5-bis(méthylpiperidinium)pentane (0,07 mole) et 100 ml d'eau déionisée. Le milieu réactionnel est agité à l'abri de la lumière, à 20°C, pendant 12h. Le mélange est ensuite filtré. Le filtrat obtenu est composé d'une solution aqueuse de dihydroxyde de 1,5-bis(méthylpiperidinium)pentane. Le dosage de cette espèce est réalisé par RMN du proton en utilisant l'acide formique en tant qu'étalon.

### Exemple 3 : préparation d'un solide IZM-3 selon l'invention.

3,530 g d'une suspension colloïdale de silice, connue sous le terme commercial Ludox AS-40 commercialisée par Aldrich, est incorporée dans une solution composée de 0,615 g d'oxyde de germanium amorphe (Aldrich), 14,374 g d'une solution aqueuse à 30,9 % massique de dihydroxyde de 1,5-bis(méthylpiperidinium)pentane, 0,745 g d'une solution aqueuse à 39,5 % massique d'acide fluorhydrique et de 0,736 g d'eau déionisée. La composition molaire du mélange est la suivante : 0,8 SiO₂ ; 0,2 GeO₂ ; 0,5 R ; 0,5 HF ; 25 H₂O. Le mélange est agité vigoureusement pendant une demi-heure. Le mélange est ensuite transféré, après homogénéisation, dans un autoclave. L'autoclave est chauffé pendant 10 jours à 170°C sous agitation (200 tours/min). Le produit cristallisé obtenu est filtré, lavé à l'eau déionisée (pour atteindre un pH neutre) puis séché une nuit à 100°C.

Le produit solide brut de synthèse a été analysé par diffraction des rayons X et identifié comme étant constitué de solide IZM-3. Le diagramme de diffraction effectué sur le solide IZM-3 brut de synthèse est donné par la figure 1.

### Exemple 4 : préparation d'un solide IZM-3 selon l'invention.

3,156 g d'une suspension colloïdale de silice, connue sous le terme commercial Ludox AS-40 commercialisée par Aldrich, est incorporée dans une solution composée de 0,245 g d'oxyde de germanium amorphe (Aldrich), 11,425 g d'une solution aqueuse à 30,9 % massique de dihydroxyde de 1,5-bis(méthylpiperidinium)pentane, 0,592 g d'une solution aqueuse à 39,5 % massique d'acide fluorhydrique et de 4,583 g d'eau déionisée. La composition molaire du mélange est la suivante : 0,9 SiO₂ ; 0,1 GeO₂ ; 0,5 R ; 0,5 HF ; 35 H₂O. Le mélange est agité vigoureusement pendant une demi-heure. Le mélange est ensuite transféré, après homogénéisation, dans un autoclave. L'autoclave est chauffé pendant 7 jours à 170°C sous agitation (200 tours/min). Le produit cristallisé obtenu est filtré, lavé à l'eau déionisée (pour atteindre un pH neutre) puis séché une nuit à 100°C.

Le produit solide brut de synthèse a été analysé par diffraction des rayons X et identifié comme étant constitué de solide IZM-3. Le diagramme de diffraction effectué sur le solide IZM-3 brut de synthèse est donné par la figure 1.

### Exemple 5 : préparation d'un solide IZM-3 selon l'invention.

3,525 g d'une suspension colloïdale de silice, connue sous le terme commercial Ludox AS-40 commercialisée par Aldrich, est incorporée dans une solution composée de 11,485 g d'une solution aqueuse à 30,9 % massique de dihydroxyde de 1,5-bis(méthylpiperidinium)pentane, 0,595 g d'une solution aqueuse à 39,5 % massique d'acide fluorhydrique et de 4,395 g d'eau déionisée. La composition molaire du mélange est la suivante : 1 SiO₂ 0,5 R ; 0,5 HF ; 35 H₂O. Le mélange est agité vigoureusement pendant une demi-heure. Le mélange est ensuite transféré, après homogénéisation, dans un autoclave. L'autoclave est chauffé pendant 7 jours à 170°C sous agitation (200 tours/min). Le produit cristallisé obtenu est filtré, lavé à l'eau déionisée (pour atteindre un pH neutre) puis séché une nuit à 100°C.

Le produit solide brut de synthèse a été analysé par diffraction des rayons X et identifié comme étant constitué de solide IZM-3. Le diagramme de diffraction effectué sur le solide IZM-3 brut de synthèse est donné par la figure 1.

## Revendications

1. Solide cristallisé IZM-3 présentant un diagramme de diffraction des rayons X incluant au moins les raies inscrites dans le tableau ci-dessous :
| 2 thêta (°) | dₕₖₗ (Å) | Iᵣₑₗ | 2 thêta (°) | dₕₖₗ (Å) | Iᵣₑₗ |
|---|---|---|---|---|---|
| 5,59 | 15,80 | FF | 25,09 | 3,55 | ff |
| 8,56 | 10,32 | ff | 26,00 | 3,42 | ff |
| 10,36 | 8,53 | ff | 26,73 | 3,33 | ff |
| 11,16 | 7,92 | ff | 27,40 | 3,25 | ff |
| 12,93 | 6,84 | ff | 28,17 | 3,16 | ff |
| 13,56 | 6,53 | ff | 28,61 | 3,12 | ff |
| 15,79 | 5,61 | ff | 29,74 | 3,00 | ff |
| 16,77 | 5,28 | ff | 31,31 | 2,85 | ff |
| 18,70 | 4,74 | ff | 32,62 | 2,74 | ff |
| 19,20 | 4,62 | ff | 33,86 | 2,65 | ff |
| 20,15 | 4,40 | ff | 37,10 | 2,42 | ff |
| 20,87 | 4,25 | ff | 38,18 | 2,36 | ff |
| 22,37 | 3,97 | f | 42,09 | 2,15 | ff |
| 24,29 | 3,66 | ff | | | |
| | | | | | |
|---|---|---|---|---|---|
| où FF = très fort ; F = fort ; m = moyen ; mf = moyen faible ; f = faible ; ff = très faible et présentant une composition chimique exprimée sur une base anhydre, en termes de moles d'oxydes, définie par la formule générale suivante : aSiO₂ : bYO₂ : cR : dF, où Y représente au moins un élément tétravalent différent du silicium, R représente au moins une espèce organique azotée et F est le fluor, a, b, c et d représentant respectivement le nombre de moles de SiO₂, YO₂, R et F et a est compris entre 0,1 et 1, b est compris entre 0 et 0,9, c est compris entre 0,01 et 0,5 et d est compris entre 0 et 0,5. | | | | | |

2. Solide cristallisé IZM-3 selon la revendication 1 dans lequel Y est choisi parmi le germanium, le titane, l'étain et le mélange d'au moins deux de ces éléments tétravalents.

3. Solide cristallisé IZM-3 selon la revendication 2 dans lequel Y est le germanium.

4. Solide cristallisé IZM-3 selon l'une des revendications 1 à 3 dans lequel a est compris entre 0,5 et 1.

5. Solide cristallisé IZM-3 selon l'une des revendications 1 à 4 dans lequel b est compris entre 0,01 et 0,2.

6. Solide cristallisé IZM-3 selon l'une des revendications 1 à 5 dans lequel c est compris entre 0,02 et 0,05.

7. Solide cristallisé IZM-3 selon l'une des revendications 1 à 6 dans lequel d est compris entre 0,01 et 0,05.

8. Procédé de préparation d'un solide cristallisé IZM-3 selon l'une des revendications 1 à 7 comprenant
- le mélange en milieu aqueux d'au moins une source de silicium, éventuellement d'au moins une source d'au moins un oxyde YO₂, d'au moins une espèce organique azotée R comportant au moins un atome d'azote quaternaire, au moins une source de fluor tel que la composition molaire du mélange réactionnel est telle que :
SiO₂/YO₂ : au moins 0,1,
H₂O/(SiO₂ + YO₂) : 1 à 100,
R/(SiO₂ + YO₂) : 0,02 à 2,
F/(SiO₂ + YO₂) : 0,01 à 4
- le traitement hydrothermal dudit mélange jusqu'à ce que ledit solide cristallisé IZM-3 se forme.

9. Procédé de préparation d'un solide cristallisé IZM-3 selon la revendication 8 tel que R est le composé azoté 1,5-bis(méthylpiperidinium)pentane.

## Claims

1. An IZM-3 crystalline solid with an Xray diffraction diagram including at least the peaks shown in the table below:
| 2 theta (°) | dₕₖₗ (Å) | Iᵣₑₗ | 2 theta (°) | dₕₖₗ (Å) | Iᵣₑₗ |
|---|---|---|---|---|---|
| 5.59 | 15.80 | Vs | 25.09 | 3.55 | Vw |
| 8.56 | 10.32 | Vw | 26.00 | 3.42 | Vw |
| 10.36 | 8.53 | Vw | 26.73 | 3.33 | Vw |
| 11.16 | 7.92 | Vw | 27.40 | 3.25 | Vw |
| 12.93 | 6.84 | Vw | 28.17 | 3.16 | Vw |
| 13.56 | 6.53 | Vw | 28.61 | 3.12 | Vw |
| 15.79 | 5.61 | Vw | 29.74 | 3.00 | Vw |
| 16.77 | 5.28 | Vw | 31.31 | 2.85 | Vw |
| 18.70 | 4.74 | Vw | 32.62 | 2.74 | Vw |
| 19.20 | 4.62 | Vw | 33.86 | 2.65 | Vw |
| 20.15 | 4.40 | Vw | 37.10 | 2.42 | Vw |
| 20.87 | 4.25 | Vw | 38.18 | 2.36 | Vw |
| 22.37 | 3.97 | W | 42.09 | 2.15 | Vw |
| 24.29 | 3.66 | Vw | | | |
| | | | | | |
|---|---|---|---|---|---|
| in which: Vs = very strong; S = strong; M = medium; Mw = medium weak; W = weak; Vw = very weak, and having a chemical composition expressed as the anhydrous base in terms of moles of oxides defined by the following general formula: aSiO₂: bYO₂: cR: dF, in which Y represents at least one tetravalent element other than silicon, R represents at least one organic nitrogen-containing species, and F is fluorine, a, b, c and d respectively representing the number of moles of SiO₂, YO₂, R and F and a is in the range 0.1 to 1, b is in the range 0 to 0.9, c is in the range 0.01 to 0.5 and d is in the range 0 to 0.5. | | | | | |

2. An IZM-3 crystalline solid according to claim 1, in which Y is selected from germanium, titanium, tin and a mixture of at least two of said tetravalent elements.

3. An IZM-3 crystalline solid according to claim 2, in which Y is germanium.

4. An IZM-3 crystalline solid according to one or claims 1 to 3, in which a is in the range 0.5 to 1.

5. An IZM-3 crystalline solid according to one of claims I to 4, in which b is in the range 0.01 to 0.2.

6. An IZM-3 crystalline solid according to one of claims 1 to 5, in which c is in the range 0.02 to 0.05.

7. An IZM-3 crystalline solid according to one of claims 1 to 6, in which d is in the range 0.01 to 0.05.

8. A process for preparing an IZM-3 crystalline solid according to one of claims 1 to 7, comprising
- mixing, in an aqueous medium, at least one source of silicon, optionally at least one source of at least one oxide YO₂ at least one organic nitrogen-containing species R comprising at least one quaternary nitrogen atom, at least one source of fluorine, in which the molar composition of the reaction mixture is such that:
| | |
|---|---|
| SiO₂/YO₂ | : at least 0.1; |
| H₂O/(SiO₂ + YO₂) | : 1 to 100; |
| R/(SiO₂ + YO₂) | : 0.02 to 2; |
| 1:/(SiO₂ + YO₂) | : 0.01 to 4. |
- carrying out hydrothermal treatment of said mixture until said IZM-3 crystalline solid is formed.

9. A process for preparing an IZM-3 crystalline solid according to claim 8, in which R is the nitrogen-containing compound1,5-bis (methylpiperidinium)pentane.

## Patentansprüche

1. Kristallisierter Festkörper IZM-3, der ein Röntgendiffraktionsdiagramm aufweist, das mindestens die Linien enthält, die in der nachfolgenden Tabelle eingetragen sind:
| 2 theta (°) | dₕₖₗ (Å) | Iᵣₑₗ | 2 theta (°) | dₕₖₗ (Å) | Iᵣₑₗ |
|---|---|---|---|---|---|
| 5,59 | 15,80 | FF | 25,09 | 3,55 | ff |
| 8,56 | 10,32 | ff | 26,00 | 3,42 | ff |
| 10,36 | 8,53 | ff | 26,73 | 3,33 | ff |
| 11,16 | 7,92 | ff | 27,40 | 3,25 | ff |
| 12,93 | 6,84 | ff | 28,17 | 3,16 | ff |
| 13,56 | 6,53 | ff | 28,61 | 3,12 | ff |
| 15,79 | 5,61 | ff | 29,74 | 3,00 | ff |
| 16,77 | 5,28 | ff | 31,31 | 2,85 | ff |
| 18,70 | 4,74 | ff | 32,62 | 2,74 | ff |
| 19,20 | 4,62 | ff | 33,86 | 2,65 | ff |
| 20,15 | 4,40 | ff | 37,10 | 2,42 | ff |
| 20,87 | 4,25 | ff | 38,18 | 2,36 | ff |
| 22,37 | 3,97 | f | 42,09 | 2,15 | ff |
| 24,29 | 3,66 | ff | | | |
| | | | | | |
|---|---|---|---|---|---|
| wobei FF = sehr hoch; F = hoch; m = mittel; mf = mittel hoch; f = niedrig; ff = sehr niedrig ist, und eine chemische Zusammensetzung aufweist, die auf wasserfreier Basis in Oxidmol ausgedrückt, und durch die folgende allgemeine Formel definiert wird: aSiO₂ : bYO₂ : cR : dF, worin Y für mindestens ein tetravalentes Element steht, das verschieden von Silicium ist, R für mindestens eine organische stickstoffhaltige Spezies steht und F Fluor ist, a, b, c und d jeweils für die Molanzahl von SiO₂, YO₂ stehen, R und F und a im Bereich zwischen 0,1 und 1 liegen, b im Bereich zwischen 0 und 0,9 liegt, c im Bereich zwischen 0,01 und 0,5 liegt und d im Bereich zwischen 0 und 0,5 liegt. | | | | | |

2. Kristallisierter Festkörper IZM-3 nach Anspruch 1, wobei Y aus Germanium, Titan, Zinn und dem Gemisch aus mindestens zwei dieser tetravalenten Elemente ausgewählt ist.

3. Kristallisierter Festkörper IZM-3 nach Anspruch 2, wobei Y Germanium ist.

4. Kristallisierter Festkörper IZM-3 nach einem der Ansprüche 1 bis 3, wobei a im Bereich zwischen 0,5 und 1 liegt.

5. Kristallisierter Festkörper IZM-3 nach einem der Ansprüche 1 bis 4, wobei b im Bereich zwischen 0,01 und 0,2 liegt.

6. Kristallisierter Festkörper IZM-3 nach einem der Ansprüche 1 bis 5, wobei c im Bereich zwischen 0,02 und 0,05 liegt.

7. Kristallisierter Festkörper IZM-3 nach einem der Ansprüche 1 bis 6, wobei d im Bereich zwischen 0,01 und 0,05 liegt.

8. Verfahren zur Herstellung eines kristallisierten Festkörpers IZM-3 nach einem der Ansprüche 1 bis 7, umfassend:
- das Mischen in wässrigem Medium mindestens einer Siliciumquelle, gegebenenfalls mindestens einer Quelle mindestens eines Oxids YO₂, mindestens einer organischen stickstoffhaltigen Spezies R, die mindestens ein quaternäres Stickstoffatom umfasst, mindestens einer Fluorquelle, so dass die Molzusammensetzung des Reaktionsgemischs folgendermaßen lautet:
SiO₂/YO₂ : mindestens 0,1,
H₂O/(SiO₂ + YO₂): 1 bis 100,
R/(SiO₂ + YO₂) : 0,02 bis 2,
F/(SiO₂ + YO₂) 0,01 bis 4.
- die hydrothermische Behandlung des Gemischs, bis sich der kristallisierte Festkörper IZM-3 bildet.

9. Verfahren zur Herstellung eines kristallisierten Festkörpers IZM-3 nach Anspruch 8, so dass R die stickstoffhaltige Verbindung 1,5-Bis(methylpiperidinium)pentan ist.
